# FASCICULE DE BREVET EUROPEEN

(11) **EP 3 817 294 B1**
(45) Date de publication et mention de la délivrance du brevet: **05.04.2023**
(21) Numéro de dépôt: 20203883.2
(22) Date de dépôt: 26.10.2020
(51) Int. Cl.: H04L 41/0896, H04L 43/0805, H04L 43/0876, H04L 47/783, H04L 12/46, H04W 28/02, H04W 40/24

(54) **PROCEDE ET MODULE POUR LA REGULATION DE LA CONNECTIVITE D OBJETS CONNECTES**
VERFAHREN UND MODULE ZUR KONNEKTIVITÄTSTEUERUNG VON VERBUNDENEN OBJEKTEN
METHOD AND MODULE FOR A CONNECTIVITY REGULATION OF CONNECTED OBJECTS.

(30) Priorité: 04.11.2019 FR 1912354
(43) Date de publication de la demande: 05.05.2021
(73) Titulaire: Bull SAS, 78340 Les Clayes-sous-Bois (FR)
(72) Inventeur: DEMEILLIEZ, Bruno, 38380 Saint Laurent du Pont (FR); AIELLO, Damien, 38500 La Buisse (FR); CHAABANE, Wajih, 73000 Chambery (FR)
(74) Mandataire: IPAZ

(56) Documents cités:
- US-A1- 2011 116 444
- US-A1- 2017 257 322

## Description

L'invention s'intéresse au domaine des dispositifs réseaux et plus particulièrement à la connectivité des objets connectés. L'invention concerne un procédé de régulation de la connectivité pour une pluralité d'objets connectés. L'invention concerne en outre un module de fluidification pour la régulation de la connectivité d'une pluralité d'objets connectés. L'invention concerne également un système comprenant un tel module de fluidification.

### [Art antérieur]

Historiquement, les entités adressables sur le réseau Internet étaient uniquement des éléments d'information numériques, à savoir des pages HTML ou d'autres fichiers accessibles en ligne, et identifiables par des adresses URL de sites web, par exemple. Considéré comme la troisième révolution de l'internet, l'internet des objets ou IdO (en anglais « Internet Of Things », ou loT) peut être regardé comme l'extension d'Internet à des éléments physiques.

L'internet des objets désigne l'ensemble des objets connectés à internet et correspond au domaine des Nouvelles Technologies de l'information et de la Communication qui est en pleine expansion. Les dispositifs électroniques concernés par ces applications sont appelés des objets connectés, en ce sens qu'ils interagissent au travers de sous-réseaux locaux pouvant être connectés à un réseau central comme l'Internet.

Ainsi, une définition de l'internet des objets est proposée dans l'ouvrage intitulé « L'internet des objets », de Pierre-Jean Benghozi, Sylvain Bureau, et Françoise Massit-Folléa publié aux Éditions de la Maison des sciences de l'homme, Chapitre 1, pp. 15-23, comme étant « un réseau de réseaux qui permet, via des systèmes d'identification électronique normalisés et unifiés, et des dispositifs mobiles sans fil, d'identifier directement et sans ambiguïté des entités numériques et des objets physiques et ainsi de pouvoir récupérer, stocker, transférer et traiter, sans discontinuité entre les mondes physiques et virtuels, les données s'y rattachant. »

Plusieurs sous-réseaux locaux peuvent être intégrés à un même réseau d'objets connectés. Un tel réseau d'objets connectés, aussi appelé réseau local dans la suite, comprend alors plusieurs passerelles de connexion, propres à chaque sous-réseau, auxquelles sont respectivement connectés un ou plusieurs objets connectés. Chaque passerelle de connexion assure le routage de messages qui transitent, d'une part, entre les différents objets connectés du réseau local et, d'autre part, entre les objets connectés du réseau local et un réseau de transport de données (comme par exemple Internet).

Les usages des objets connectés sont très variés et peuvent aller du domaine de l'e-santé à celui de la domotique en passant par les téléphones mobiles, le concept d'environnement intelligent et notamment de ville intelligente (ou « Smart City », en anglais), la surveillance (en anglais : « monitoring ») d'installations industrielles, les transports et la logistique, les voitures autonomes, l'agriculture, etc. Les objets connectés envahissent un peu plus chaque jour notre quotidien. On comptait 4,9 milliards d'objets en 2015. On parle de 25 à 150 milliards d'objets connectés en 2025. A cette croissance exponentielle, s'ajoute une très grande diversité des domaines d'applications : santé, transport, commerce, domotique...

Le nombre et la diversité constituent un vrai défi technique pour l'accès à Internet de l'ensemble de ces objets. En particulier, la connectivité à Internet de ces objets connectés peut être variable dans le temps et l'augmentation du nombre d'objets connectés à Internet peut entrainer une instabilité de l'accès à Internet. Dans certains cas, la connectivité peut ne pas être permanente, et affecter les performances qui se retrouvent irrégulières ou limitées. Dans d'autres cas, la connectivité peut-être multiple, c'est-à-dire qu'elle peut s'effectuer simultanément par plus d'une passerelle de connexion à l'Internet, notamment avec la mise en oeuvre du concept d'agrégation de liens. Dans ce cas, la multiplication des objets connectés et l'ultra-connexion ont pour conséquence de saturer les accès Internet, souvent en journée pour les délaisser la nuit. Cette problématique est d'autant plus vraie avec des connexions de mauvaise qualité.

Enfin, outre le fait que chaque sous-réseau peut s'appuyer sur une technologie qui lui est propre pour sa connectivité à l'Internet (par exemple avec une Box ADSL, une BOX 4G, une connexion WiMax, une connexion Satellite, un téléphone portable...), chaque passerelle de connexion utilise potentiellement une ou plusieurs interfaces de communication différentes. Typiquement, les passerelles de connexion d'un réseau d'objets connectés peuvent utiliser des interfaces Ethernet, des interfaces WIFI, des interfaces Bluetooth, des interfaces RF433 ou encore des interfaces IrDA. Ainsi, l'interconnexion entre différentes passerelles de connexion suppose que chaque passerelle de connexion soit capable d'assurer ses fonctions de routage quelles que soient les différentes interfaces de communication utilisées par les différentes passerelles de connexion concernées.

Il a été proposé des procédés et dispositifs d'orchestration et d'arbitrage de niveau de service de connectivité sur des plateformes loT (EP3462707). Il a aussi été proposé des procédés et dispositifs pour la gestion des connexions Internet et l'information d'utilisateur sur la connectivité (WO2007/077583). Le document US 2017/257322 A1 est aussi pertinent.

Néanmoins, à ce jour, aucune solution ne permet de fluidifier les accès Internet des objets connectés. Ainsi, il existe un besoin pour de nouveaux procédés ou systèmes pour la fludification de la connectivité des objets connectés à Internet.

### [Problème technique]

L'invention a donc pour but de remédier aux inconvénients de l'art antérieur. En particulier, l'invention a pour but de proposer un procédé de régulation de la connectivité pour une pluralité d'objets connectés impliquant plusieurs passerelles de connexion, ledit procédé étant rapide et simple à mettre en oeuvre, avec un nombre réduit d'étapes, et permettant de réguler et fluidifier les accès à Internet des objets connectés.

L'invention a en outre pour but de proposer un module de fluidification de la connectivité pour une pluralité d'objets connectés, ledit module de fluidification pouvant être facilement intégré à un réseau (sous réseaux, réseau local) et permettant la fluidification et la régulation des accès Internet par l'intermédiaire de plusieurs passerelles de connexion.

### [Brève description de l'invention]

A cet effet, l'invention porte sur un procédé de régulation de la connectivité pour une pluralité d'objets connectés, lesdits objets connectés appartenant à des sous-réseaux connectés à un réseau principal par l'intermédiaire de passerelles de connexion, ledit procédé étant mis en oeuvre par un module de fluidification, ledit procédé comprenant :
- Une étape de collecte de données de connexion de la pluralité d'objets connectés;
- Une étape d'analyse des données de connexion collectées de façon à identifier plusieurs périodes de temps de disponibilité, chacune des périodes de temps de disponibilité correspondant à un intervalle temporel au cours duquel un ou plusieurs d'objets connectés pourront accéder au réseau principal ;
- Une étape de réception d'au moins un message de requête de connexion d'un objet connecté au réseau principal, ledit message de requête de connexion comportant des données de caractéristiques de la connexion requise ; et
- Une étape de régulation de connexion de la pluralité d'objets connectés au réseau principal en fonction des périodes de temps de disponibilité et des données de caractéristiques de la connexion requise.

Le procédé selon l'invention permet la fluidification des accès Internet. Ce procédé permet en particulier d'optimiser la connectivité des objets connectés en planifiant et régulant les connexions desdits objets connectés à Internet. En outre, le procédé permet d'améliorer l'accès à Internet en permettant de stabiliser les performances.

Ainsi, ce procédé s'adresse en priorité aux réseaux informatiques disposant d'un accès internet aux performances irrégulières ou limitées et dont l'utilisation serait hétérogène dans le temps. En outre, le procédé selon l'invention peut permettre d'éviter toute saturation notamment en fonction de la saisonnalité des volumes de données échangés.

Par ailleurs, le procédé selon l'invention permet également et avantageusement aux objets connectés de réduire leur consommation de ressources en leur permettant d'optimiser et de planifier leurs échanges, ils peuvent ainsi réduire leur temps de connexion voire limiter aux seuls créneaux planifiés avec le module de fluidification.

### Selon d'autres caractéristiques optionnelles du procédé :

- il comporte une étape de collecte de données de connectivité des passerelles de connexion. Les données de connectivités peuvent par exemple correspondre à des valeurs de paramètre de connexion des passerelles telles que la technologie de communication utilisée. En particulier, les données de connectivités peuvent comporter une disponibilité ou non de chaque passerelle de connexion, la consommation de bande passante par passerelle de connexion et la qualité de la connectivité internet de chaque passerelle de connexion. Les données de connectivités des passerelles pourront être utilisées de façon à ce que l'étape de régulation en tienne compte et ainsi permette d'orienter chacun des objets connectés vers la passerelle qui répondra au mieux à ces besoins au moment où il en aura besoin. Ainsi, de façon préférée, le procédé selon l'invention comporte une étape de collecte de données de connectivité des passerelles de connexion et l'étape de régulation est réalisée en fonction en outre des données de connectivité des passerelles de connexion.
- Il comporte une étape d'établissement d'un référentiel de disponibilité. Un tel référentiel de disponibilité permet de référencer les périodes de temps de disponibilité. Il peut en particulier comporter une cartographie des connexions de chaque IoT, de préférence traversant les différentes passerelles et cela en fonction du temps. Ainsi, à partir d'un tel référentiel de disponibilité il est possible d'obtenir une estimation de la consommation en bande passante utilisée pour un intervalle temporel et de déterminer, de préférence par le module de fluidification, plusieurs périodes de temps de disponibilité durant lesquelles certains échanges de données sont le plus propice.

- la collecte des données de connexion de la pluralité d'objets connectés et des données de connectivités des passerelles de connexion est réalisée en continu. En particulier, une telle collecte ou surveillance en continu permet de générer des données de consommation en bande passante, de disponibilité des passerelles, de qualité de la connectivité pour chaque passerelle de connexion, et d'utilisation de la connexion par les objets connectés. Une telle collecte peut permettre la génération d'une cartographie des connexions de chaque IoT, de préférence traversant les différentes passerelles et cela en fonction du temps.
- Il comporte une étape de mise à jour d'un référentiel de disponibilité. Cette mise à jour permet de disposer en temps réel d'une information sur les périodes de temps de disponibilité. Le référentiel de disponibilité peut se baser alors sur des estimations reposant sur des mesures passées ainsi que sur des valeurs mesurées à un instant donné.
- la ou les étapes de collecte de données comprennent la collecte d'au moins une donnée de consommation en bande passante ou de disponibilité des passerelles de connexion.
- le message de requête de connexion comprend une fréquence d'utilisation. Ainsi, il pourra être déterminé en une seule fois l'influence de cette requête sur la connectivité du système et réguler la connexion de façon à anticiper des connexions récurrentes.
- il comprend une étape d'interrogation du module de fluidification, par un objet connecté de la pluralité d'objets connectés, pour l'obtention d'une période de temps disponible.
- il comprend une étape de classement des objets connectés en fonction d'une fonction de priorisation d'objets connectés. Il peut également comporter une étape de classement des messages de requêtes des objets connectés en fonction d'une fonction de priorisation de message de requête. Ainsi, le module de fluidification sera en mesure de proposer des périodes de disponibilités en priorité à des objets connectés ou pour des messages de requête prioritaire.
- il comprend une étape d'élection, par un objet connecté de la pluralité d'objets connectés, d'une période de temps optimale de disponibilité en fonction des périodes de temps de disponibilités identifiées.
- il comprend une étape d'élection, par le module de fluidification, d'une période de temps optimale de disponibilité en fonction des périodes de temps de disponibilités identifiées.

L'invention porte en outre sur un **module de fluidification** pour la régulation de la connectivité pour une pluralité d'objets connectés, appartenant à des sous-réseaux connectés à un réseau principal par l'intermédiaire de passerelles de connexion, ledit module de fluidification étant configuré pour :
- Collecter des données de connexion de la pluralité d'objets connectés,
- Analyser les données de connexion collectées de façon à identifier plusieurs périodes de temps de disponibilité, chacune des périodes de temps de disponibilité correspondant à un intervalle temporel au cours duquel un ou plusieurs objets connectés pourront accéder au réseau principal,
- Réceptionner au moins un message de requête de connexion d'un objet connecté au réseau principal, ledit message de requête de connexion comportant des données de caractéristiques de la connexion requise, et
- Réguler la connexion de la pluralité d'objets connectés au réseau principal en fonction des périodes de temps de disponibilité et des données de caractéristiques de la connexion requise.

Le module de fluidification selon l'invention permet la régulation des accès Internet par des objets connectés. Ce module de fluidification permet en particulier d'optimiser la connectivité des objets connectés en planifiant et régulant les connexions desdits objets connectés à Internet. En outre, l'utilisation du module de fluidification engendre une stabilité des accès Internet et des performances. Enfin, grâce au module de fluidification selon l'invention la connectivité des objets connectés à Internet est homogène dans le temps tout en assurant des connexions de qualité.

Par ailleurs, le module de fluidification selon l'invention permet également et avantageusement aux objets connectés de réduire leur consommation de ressources en leur permettant d'optimiser et de planifier leurs échanges particulièrement en proposant des périodes de temps de disponibilité. Les objets connectés peuvent ainsi réduire leur temps de connexion voire se limiter aux seuls créneaux planifiés avec le module de fluidification. Cela engendre une réduction de la consommation en bande passante mais également énergétique. En outre, cela permet d'améliorer la sécurité des objets connectés.

L'invention porte en outre sur **une passerelle de connexion** comprenant un module de fluidification selon l'invention.

L'invention porte en outre sur **un système de régulation** de la connectivité pour une pluralité d'objets connectés appartenant à des sous-réseaux connectés à un réseau principal par l'intermédiaire de passerelles de connexion, ledit système comprenant au moins un module de fluidification selon l'invention, au moins deux passerelles de connexion et au moins deux objets connectés.

L'invention porte en outre sur **un produit programme d'ordinateur** comprenant des instructions qui, lorsque le programme est exécuté par un ordinateur, conduisent à mettre en oeuvre le procédé selon l'invention.

L'invention porte en outre sur **un support lisible par ordinateur,** sur lequel est enregistré le programme d'ordinateur selon l'invention.

L'invention porte en outre sur un signal d'un support de données, portant le produit programme d'ordinateur selon l'invention.

D'autres avantages et caractéristiques de l'invention apparaitront à la lecture de la description suivante donnée à titre d'exemple illustratif et non limitatif, en référence aux Figures annexées :
La figure 1 représente un schéma montrant une architecture de réseaux locaux comprenant plusieurs objets connectés et passerelles de connexion ;
La figure 2 représente un schéma des principales étapes d'un procédé selon l'invention ;
La figure 3 représente un diagramme fonctionnel illustrant un mode de réalisation du procédé selon l'invention ;
La figure 4 représente un schéma d'un mode de réalisation d'un module de fluidification selon l'invention ;
La figure 5 représente un schéma d'un mode de réalisation de l'invention ;
La figure 6 représente un schéma d'un mode de réalisation de l'invention ;
La figure 7 représente un schéma d'un mode de réalisation de l'invention,
La figure 8 représente un schéma d'un mode de réalisation de l'invention.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuer des combinaisons de matériel spécial et d'instructions informatiques.

### [Description de l'invention]

Dans la suite de la description, on entend par « **objets connectés** » un dispositif ou système électronique connecté, de préférence sans fil, à un réseau et pouvant partager des informations avec un serveur, un ordinateur, une tablette électronique, un smartphone, un réfrigérateur, une imprimante ou tout autre appareil électronique apte à se connecter à un réseau de communication.

On entend par « **régulation** » au sens de l'invention, un contrôle ou un maintien ou une maîtrise de la connectivité des objets connectés à Internet. En outre, une régulation au sens de l'invention peut comprendre une planification d'accès à Internet. Il peut s'agir par exemple, d'une adaptation permanente de la connectivité des objets connectés à Internet.

On entend par « **planification** » au sens de l'invention une programmation des connexions à Internet des objets connectés suivant des périodes de temps déterminées.

L'expression « **sous-réseau** » ou « réseau local » au sens de l'invention correspond par exemple à des réseaux locaux, auxquels sont connectés des objets connectés, servis chacun par au moins une passerelle de connexion à un réseau principal tel qu'Internet.

L'expression « **réseau principal** » au sens de l'invention est un réseau étendu, à haut débit, utilisant un protocole de transport fiable en mode connecté, comme par exemple le protocole TCP/IP (TCP ou « Transmission Control Protocol » étant un protocole de couche 4 du modèle OSI ou « Open Systems Interconnection » selon une terminologie anglo-saxonne, sur IP qui est un protocole de la couche 3 du modèle OSI). Le protocole TCP/IP est documenté dans la RFC 7931 de l'IETF (« Internet Engineering Task Force » selon une terminologie anglo-saxonne). Il peut s'agir par exemple d'un réseau **Internet.**

On entend par « **passerelle** » ou « **passerelle de connexion** » au sens de l'invention, un équipement assurant la connexion entre des équipements appartenant à des réseaux différents, par exemple assurant la connexion des équipements d'un réseau local (adresses IP locales, pour « Internet Protocol » selon une terminologie anglo-saxonne) et des services internet (adresses IP publiques). De ce fait, une telle passerelle possède les deux types d'adresses IP. Son adresse IP publique, attribuée par le fournisseur d'accès internet, plus communément désigné par l'acronyme « FAI », lui permet d'échanger les données avec le réseau Internet. Son adresse IP locale lui permet d'échanger des données avec les équipements du réseau local. Elle est généralement spécifique et attribuée par défaut par le FAI.

On entend par « **niveaux de priorité** » ou « **niveau de priorité** » un ordonnancement croissant selon des valeurs de caractéristiques ou paramètres tels que le type de connectivité, le coût, l'indice de qualité de la connectivité et/ou le niveau de sécurité, la nature de la connexion requise, etc... pour calculer une valeur de priorité qui correspond au niveau de priorité de chaque loT. Autrement dit, si P(floT1) > P(floT2) alors l'IoT1 sera prioritaire sur l'IoT2. Cela peut également s'appliquer à des messages de requête.

L'expression « **fonction de priorisation** » au sens de l'invention peut correspondre à un protocole ou à une série d'instructions permettant de calculer un niveau de priorité à partir de valeurs de caractéristiques ou paramètres et selon une fonction ou formule prédéterminée.

On entend par « **période de temps** » au sens de l'invention une durée dans le temps pouvant comprendre une pluralité d'intervalles temporel. Une période peut correspondre à un ou plusieurs jours, une ou plusieurs semaines, un ou plusieurs mois, une ou plusieurs années, mais aussi à des périodes plus courtes telles qu'une ou plusieurs heures.

Par « **intervalle temporel** » au sens de l'invention on entend un espace-temps, limité dans le temps entre deux instants. Un intervalle de temps peut correspondre à un ou plusieurs jours, une ou plusieurs semaines, un ou plusieurs mois, une ou plusieurs années, mais aussi à des périodes plus courtes telles qu'une ou plusieurs heures. De préférence un intervalle temporel comprend un indicateur de début et de fin accompagné d'une durée ou bien un intervalle temporel comprend un indicateur de début ou de fin, l'indicateur étant accompagné d'une durée.

On entend par « **disponibilité** » au sens de l'invention une période de temps dont un ou plusieurs intervalles temporels sont libres d'accès pour permettre aux loTs de se connecter à Internet sans entrainer une perturbation ou une instabilité de l'accès à Internet, ou une performance irrégulière ou encore une utilisation hétérogène.

Au sens de l'invention « **message** » correspond à un message envoyé entre des objets connectés au travers d'au moins une passerelle ou entre objet connecté et passerelle ou encore entre passerelles ou encore entre loT et module de fluidification ou entre passerelle de connexion et module de fluidification ; et comprenant des données pouvant inclure des informations relatives à leur état et à celui de leur environnement. Le format de ces données peut par exemple correspondre à des fichiers, à des flux média (vidéo, son) ou encore à des valeurs codées. On entend par « **message de requête de connexion** » au sens de l'invention un message envoyé par au moins un objet connecté et comprenant des données de connexion de l'objet connecté.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçue pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (« ASIC » selon une terminologie anglo-saxonne) et un circuit logique programmable. Un seul processeur ou plusieurs autres unités peuvent être utilisées pour mettre en oeuvre l'invention.

On entend par « **module** » au sens de l'invention, un dispositif, un élément physique ou virtuel pouvant faire partie d'un système et pouvant posséder ses propres mécanismes interne (pilotes et périphériques etc...), capacités et fonctionnalités. Un module au sens de l'invention peut correspondre à une extension, une carte, un code, un pilote, un programme, un logiciel, un disque, un fichier, une extension, un équipement informatique, un composant ou périphérique, etc...

Par « **sonde** » ou « **sonde informatique** », on entend au sens de l'invention un logiciel associé à un équipement qui permet d'effectuer, de gérer et de faire remonter vers un équipement informatique des mesures, des valeurs de paramètres, des données de connectivité etc....

Dans les revendications, le terme **"comprendre"** ou **"comporter"** n'exclut pas d'autres éléments ou d'autres étapes.

Dans la suite de la description, les mêmes références sont utilisées pour désigner les mêmes éléments. Les signes de référence ne sauraient être compris comme limitant la portée de l'invention. En outre, les différentes caractéristiques présentées et/ou revendiquées peuvent être avantageusement combinées. Leur présence dans la description ou dans des revendications dépendantes différentes, n'excluent pas cette possibilité.

Les objets de notre quotidien ou de nos industries sont de plus en plus souvent connectés et aptes à échanger des données avec Internet. En outre, il existe de plus en plus d'objets connectés présentant une pluralité de fonctionnalités où chacune desdites fonctionnalités n'aura pas les mêmes besoins matériels et notamment de connectivités. Ainsi, un appareil de communication mobile tel qu'un téléphone portable peut être utilisé pour établir des téléchargements de vidéo en streaming, des envois de fichiers de quelques kilooctets ou à l'inverse très volumineux au moyen d'Internet quand d'autres appareils ont également besoin d'un accès à Internet comme par exemple un ordinateur ayant besoin de faire une mise à jour, ou tout autre objets connectés ayant besoin d'un accès Internet en même temps que d'autre objets connectés pour réaliser une fonction. En outre, pour communiquer les appareils ont à leur disposition plusieurs réseaux de communication fonctionnant selon différents protocoles : 5G, WIFI, LTE, UMTS... Or aujourd'hui, malgré les efforts développés pour fournir du haut débit voire très haut débit au plus grand nombre, la multiplication des objets connectés et l'ultra-connexion ont pour conséquence de saturer les accès Internet en journée pour les délaisser la nuit, que ce soit chez des particuliers ou dans des entreprises. Cette problématique est d'autant plus vraie avec des connexions de moindre qualité, l'instabilité de l'accès à Internet depuis un réseau informatique, les réseaux disposant d'un accès Internet aux performances irrégulières ou limitées et dont l'utilisation est hétérogène dans le temps ou disposant d'une connectivité limitée.

Ainsi, les inventeurs ont développé un nouveau procédé 100 de régulation de la connectivité pour une pluralité d'objets connectés loTs appartenant à des sous-réseaux connectés à un réseau principal par l'intermédiaire de passerelles de connexion GW1, GW2, ledit procédé étant de préférence mis en oeuvre par un module de fluidification 1.

Un tel procédé permet de réguler la connectivité en fonction de périodes de temps de disponibilités d'une part, et des données de caractéristique de connexion requise d'autre part. Par exemple, les mises à jour intempestives utilisent à n'importe quel moment de la bande passante, pénalisant les accès Internet des autres loTs. Un loT peut interroger un module de fluidification afin de déterminer quand l'IoT peut faire sa mise à jour, le module pouvant alors communiquer à l'IoT une période de temps disponible et plus particulièrement un intervalle de temps sur lequel l'IoT pourra se connecter à Internet pour réaliser sa mise à jour sans pénaliser les accès Internet des autres loTs. Ainsi, il est possible de profiter des caractéristiques de la connexion et de choisir l'intervalle de temps à utiliser en fonction des périodes de temps de disponibilité à la disposition de l'objet connecté et des besoins de connectivité dudit loT.

L'invention va être décrite dans le contexte d'une pluralité de sous-réseaux reliés à un réseau principal. L'invention ne se limite pas, toutefois, à cet exemple, et peut trouver des applications dans toutes autres configurations dans laquelle il y a un ou plusieurs sous-réseaux communiquant ou non entre eux, comprenant un ou plusieurs modules de fluidification.

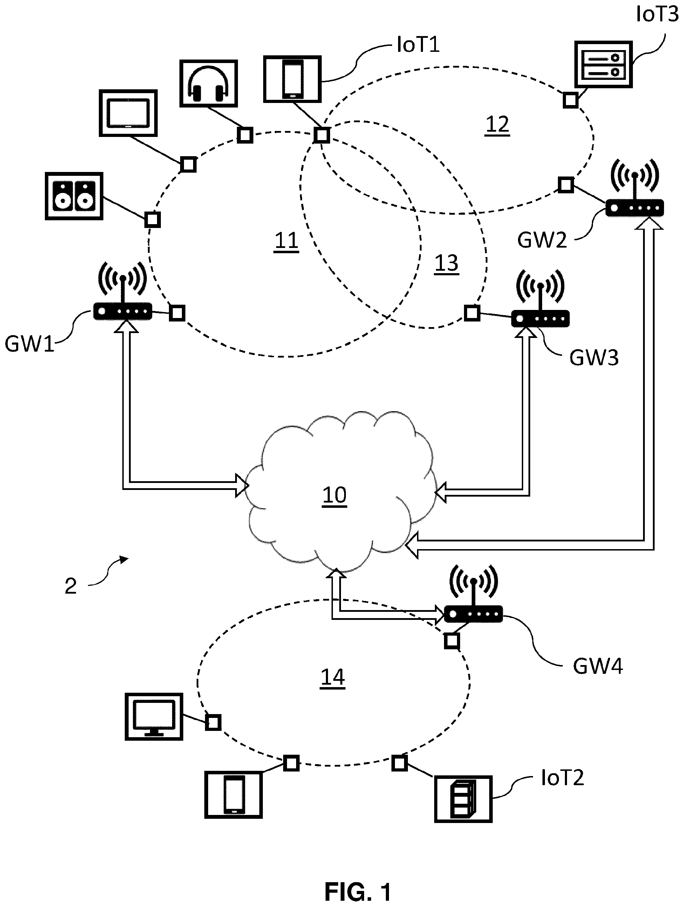

L'invention se rapporte en particulier à un procédé de régulation de la connectivité pour une pluralité d'objets connectés, lesdits objets connectés appartenant à des sous-réseaux aptes à être connectés à un réseau principal par l'intermédiaire de passerelles de connexion, ledit procédé étant mis en oeuvre par un module de fluidification. En référence au schéma de **la** **figure 1****,** une architecture de réseaux locaux à laquelle un procédé conforme à l'invention peut avantageusement s'appliquer, comprend plusieurs sous-réseaux tels que par exemple un premier sous-réseau 11, un deuxième sous réseau 12 et un troisième sous réseau 13 distincts auxquels est connecté un objet connecté loT1, ces sous-réseaux étant connectés chacun au réseau principal 10. Le réseau principal 10 dans l'exemple représenté, est le réseau Internet. Le réseau principal 10 étant lui-même connecté à un sous réseau 14.

Dans l'exemple représenté à la figure 1, le sous-réseau 11 comprend au moins **une passerelle de connexion,** comme la passerelle GW1 de connexion à Internet. De même, les sous-réseaux 12,13,14 comprennent chacun au moins une passerelle de connexion comme les passerelles de connexion GW2, GW3, et GW4 de l'exemple représenté. En particulier, dans l'exemple représenté et décrit par la suite, la passerelle GW3 permet d'accéder à un réseau de type LTE tandis que la passerelle GW2 est un accès satellite. Les passerelles permettent le transport de données entre diverses entités physiques ou virtuelles par exemple entre des loTs distincts appartenant à des sous-réseaux différents ou à un même sous-réseau, mais aussi entre un ou plusieurs sous-réseaux et Internet. Dans certains cas, un sous-réseau peut comporter plus d'une passerelle de connexion.

Chacun des réseaux locaux 11, 12, 13 et 14, comprend **un ou plusieurs objets connectés.** Une pluralité d'objets connectés peut correspondre à au moins un objet connecté, à deux objets connectés, à des dizaines, à des centaines voire à des milliers d'objets connectés ; chacun ayant une puissance de traitement qui lui est propre, des exigences de qualité de service, différents types de données ayant un débit différent et par conséquent différents besoin en bande passante pour communiquer avec Internet sans porter préjudice à la qualité de service. De manière non-limitative, ces objets connectés peuvent être : un téléphone portable connecté, une tablette connectée, un ordinateur portable connecté, des enceintes connectées, un casque audio connecté, une caméra connectée, un serveur, un capteur, une installation solaire, une station météo, un réfrigérateur connecté, une imprimante connectée, un périphérique virtuel tel qu'une application, des dispositifs commerciaux ou domotiques, tels que des systèmes de gestion d'énergie et de ressource etc.... L'invention n'entend pas être limitée, ni par le nombre ni par la nature des objets ainsi connectés aux sous-réseaux 11, 12, 13 et 14. Il peut s'agir de tout objet électronique associé à un objet physique, lieu ou personne identifiés. Chaque objet est identifié par un code individuel unique qui le distingue de tous les autres au sein du réseau local concerné, par exemple un code-barre, un code EAN (« European Article Numbering » selon une terminologie anglo-saxonne), un code EPC (« Electronic Product Code » selon une terminologie anglo-saxonne), etc.

On notera que l'identification des objets suit une tendance lourde, dans le contexte de l'émergence de l'IoT, vers l'attribution d'une adresse IP unique propre à chaque objet connecté. C'est pourquoi, dans ce qui suit, on considérera en tant que de besoin que l'identifiant unique de chaque objet connecté de chaque sous-réseau est une adresse IP. Ceci n'est toutefois pas un prérequis des modes de mise en oeuvre d'un procédé conforme à l'invention. En effet, l'interface entre les objets connectés des réseaux locaux et d'autres sous réseaux ou le réseau Internet, dont les connexions sont des connexions IP, est assurée par les passerelles GW1, GW2, GW3 et GW4 montrées à la figure 1, qui peuvent gérer une conversion ou correspondance d'adresses entre un espace d'adressage quelconque d'un sous-réseau d'une part, et l'espace d'adressage IP d'un réseau principal (e.g. internet) d'autre part.

**Les sous-réseaux** 11, 12, 13 et 14 peuvent être des réseaux spécifiquement dédiés aux objets connectés comme par exemple :
- un réseau Sigfox ;
- un réseau LoRa utilisant le protocole LoRaWAN (acronyme de « Long Range Wide-area Network » selon une terminologie anglo-saxonne) qui comme son nom l'indique est un réseau étendu à longue portée ; un réseau LPWA ou LPWAN
- ou bien des réseaux basés sur un autre protocole sans fil, ou filaire, y compris par des réseaux optiques par ondes radio comme par exemple :
   - un réseau à dimension personnelle (ou WPAN, de l'anglais « Wireless Personal Area Networks ») comme un réseau ZigBee basé sur la norme IEEE 802.15.4 ;
   - un réseau Wi-Fi ;ou un réseau Bluetooth (norme IEEE 802.15.1) ; etc.

- ou bien un réseau cellulaire, LTE/LTE-A 4G ou 5G.

Les objets connectés peuvent également fonctionner avec l'utilisation de protocole d'application réseau tel que le protocole d'application contraint (CoAP). Les loTs peuvent également être intégrés à des périphériques coordinateurs fournissant une chaîne de liens formant une arborescence de périphériques et de réseaux.

La présente invention se présente comme un mécanisme permettant la fluidification des accès à Internet des objets connectés appartenant à plusieurs sous-réseaux connectés à un réseau principal (i.e. Internet). Dans les réseaux de communications de données, les protocoles de la couche de transport ont ainsi pour vocation de transporter les données d'une application à une autre (on parle aussi de programmes applicatifs), qui s'exécutent sur des machines hôtes respectives et potentiellement dans des réseaux locaux respectifs distants l'un de l'autre, et connectés ensemble par l'intermédiaire d'un réseau étendu comme Internet.

En particulier, comme cela est représenté dans la figure 1, un des objets connectés loT1 est capable de se connecter aux trois sous-réseaux 11, 12, 13 disposants chacun d'une passerelle de connexion. Ainsi, l'objet connecté loT1 dispose de plusieurs sous réseaux pour communiquer avec Internet par l'intermédiaire de passerelle de connexion, et chaque loT de chaque sous-réseau peut communiquer avec Internet.

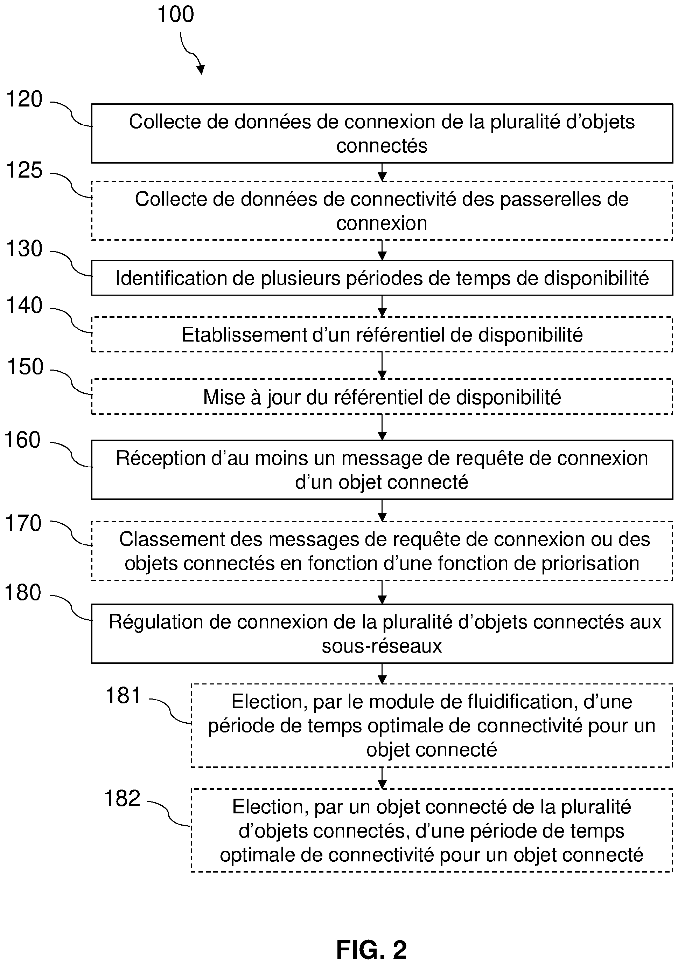

**Selon un premier aspect,** l'invention se rapporte à un procédé 100 de régulation de la connectivité pour une pluralité d'objets connectés tel qu'illustré à la **figure 2****.**

Un procédé 100 de régulation selon l'invention comporte les étapes de : Collecte de données de connexion 120 de la pluralité d'objets connectés, Identification 130 de plusieurs périodes de temps de disponibilité, Réception 160 d'au moins un message de requête de connexion d'un objet connecté et Régulation 180 de connexion de la pluralité d'objets connectés au réseau principal.

Un procédé 100 de régulation selon l'invention peut comporter également les étapes de : Découverte 110 des passerelles de connexion, Collecte 125 de données de connectivité des passerelles de connexion, Etablissement 140 d'un référentiel de disponibilité, Mise à jour 150 du référentiel de disponibilité, Classement 170 des messages de requête de connexion en fonction d'une fonction de priorisation de message, Classement 170 des objets connectés en fonction d'une fonction de priorisation d'objets connectés, Election 181 d'une période de temps optimale de connectivité pour un objet connecté ; et Election 182 d'une période de temps optimale de connectivité pour un objet connecté.

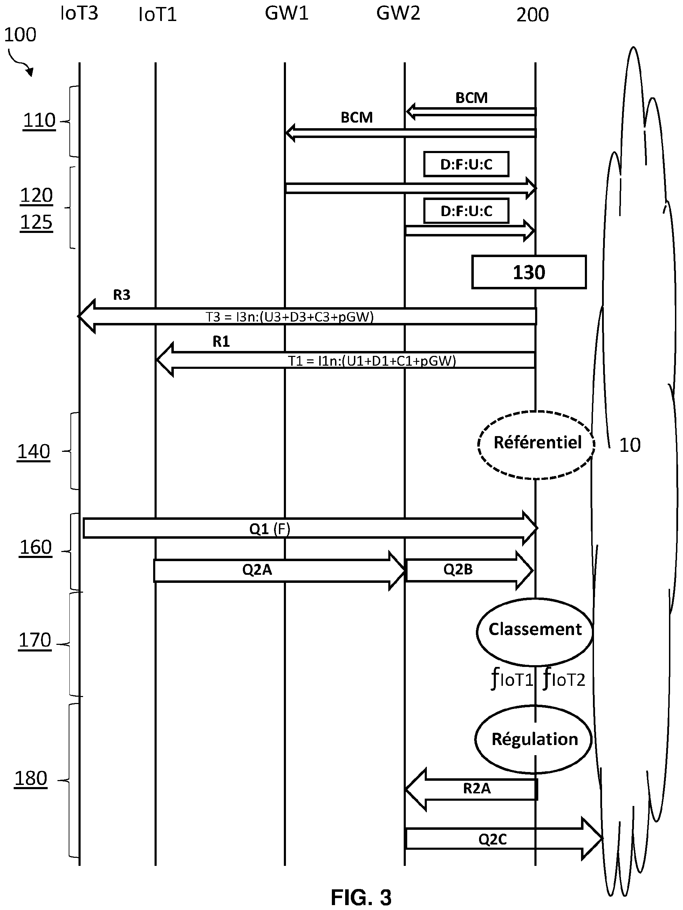

Dans l'exemple représenté à la figure 3 et exposé par la suite, un objet connecté loT1 est configuré pour accéder à plusieurs passerelles GW1,GW2 qui sont adaptées, comme la passerelle GW2, à la transmission sur un réseau principal 10 d'un message de requête Q2C envoyé par l'objet connecté loT1. Dans ce mode de réalisation illustré à la figure 3, le module de fluidification est distinct des passerelles de connexion et se situe entre les passerelles de connexion et Internet. Toutefois, ce mode de réalisation n'est pas limitatif et le procédé peut être mis en oeuvre dans une configuration différente tel que cela sera détaillé par la suite. En outre, pour des raisons de simplification, seulement deux objets connectés loT1 et loT3 sont illustrés à la figure 3.

Le procédé selon un mode de réalisation de l'invention peut comprendre une étape préalable de découverte, par le module de fluidification, des passerelles de connexion.

Cette **étape de découverte 110 de passerelles de connexion disponibles** peut comprendre initialement la connexion du module de fluidification à des sous-réseaux disponibles. Les différentes étapes et caractéristiques particulières de cette connexion seront dépendantes des sous-réseaux concernés. Par exemple, la connexion peut comporter des étapes d'attachement initial, d'authentification et d'attribution d'une adresse IP.

Comme cela est illustré, l'étape de découverte 110 comprend la diffusion par le module 200 de fluidification, d'un message d'interrogation (message BCM, mis pour « Broadcast Message » dans la flèche rectangulaire symbolisant l'étape de diffusion à la figure 3) dans plusieurs sous-réseaux 11,12,13 de transport de données. Ce message BCM est alors reçu par les passerelles GW1 et GW2, qui sont connectées aux réseaux locaux 11 et 12, comme représenté à la figure 1. Les passerelles de connexions réceptionnant le message BCM peuvent répondre sous forme de message au module 200 de fluidification pour l'informer de leur présence sur un ou plusieurs sous-réseaux. Ceci permet au module 200 de fluidification de cartographier le ou les sous-réseaux.

Un procédé selon l'invention comprend **une étape de collecte 120 de données de connexion** de la pluralité d'objets connectés aux passerelles de connexion GW1, GW2, GW3. Les données de connexion peuvent être collectées par les passerelles de connexions, par une passerelle de connexion dédiée, par un loT pour chaque sous-réseau local ou par un loT dédié pour l'ensemble des sous-réseaux locaux. De préférence, les données de connexion sont collectées au niveau de chaque passerelle de connexion. Ensuite, les données de connexion sont collectées par le module 200 de fluidification avant leur analyse.

Les données de connexion peuvent comprendre des données de connectivités propres aux loTs de chaque sous réseaux telles que :
- la consommation en bande passante en fonction du temps,
- le type de réseau,
- des plages d'adressage,
- les débits montant/descendant,
- la sécurité de la connexion,
- la qualité de service requis, et/ou
- l'identifiant de l'objet connecté.

De façon plus préférée, l'étape de collecte comprend la collecte d'au moins la consommation en bande passante en fonction du temps, la qualité de service requis, et l'identifiant de l'objet connecté.

De façon encore plus préférée, l'étape de collecte comprend la collecte d'au moins la consommation en bande passante, de préférence en fonction du temps, de chaque loT. Ceci permet de cartographier les flux traversant les différentes passerelles de connexion. En outre, la cartographie des flux permet d'obtenir l'utilisation ou la consommation en bande passante utilisée.

Comme illustré à la figure 3, un message de réponse des passerelles de connexion, par exemple à un message d'interrogation, pourra comporter des données de connexion des objets connectés associés à cette passerelle ainsi que des données de connectivités de la passerelle. A la figure 3, il est illustré le fait que le message envoyé par les passerelles comporte des données de nature de connexion D, une fréquence d'utilisation F, une durée de connexion U et une consommation de bande passante C.

De préférence, les données de connexion collectées sont stockées par le module 200 de fluidification. Alternativement, lorsque le module se trouve par exemple sur une passerelle de connexion, les données de connexion sont collectées par le module de fluidification et stockées sur les passerelles de connexion. Selon une autre alternative, une passerelle de connexion d'un sous réseau local peut stocker l'ensemble des données de connexion de la pluralité des loTs et l'ensemble des données de connectivité des passerelles de connexions de l'ensemble des sous-réseaux. L'homme du métier saura, dans la suite de la description, selon les différents modes de réalisation et d'agencement de la présente invention, à quel niveau se situent les différentes données de connexion et données de connectivités, par exemple selon si le module de fluidification est distinct ou non d'une passerelle de connexion.

L'étape de collecte 120 de données de connexion permet en outre, de surveiller et de tracer les connexions des loTs à Internet. Ainsi, chaque passerelle de connexion, ou le module de fluidification, sait quel loT est connecté, à quel moment, selon quelle durée et pour quelle utilisation.

Ainsi, un procédé selon l'invention peut avantageusement comporter une étape 125 de collecte de données de connectivité des passerelles de connexion telles que :
- la consommation en bande passante,
- la disponibilité ou non des passerelles de connexion à Internet,
- la qualité de la connectivité Internet pour chaque passerelle de connexion,
- le type de réseau,
- des plages d'adressage,
- les débits montant/descendant,
- la sécurité de la connexion,
- le coût du transport de données,
- la latence,
- le taux d'erreur, et/ou
- l'identifiant de la passerelle de connexion.

De façon préférée, l'étape de collecte comprend la collecte de données de connectivité des passerelles de connexion sélectionnés parmi :
- la consommation en bande passante,
- la qualité de la connectivité Internet pour chaque passerelle de connexion,
- le type de réseau,
- la sécurité de la connexion, et
- l'identifiant de la passerelle de connexion.

La collecte des données de connectivité peut permettre de déterminer les disponibilités de chaque passerelle de connexion à Internet. En outre, l'étape de collecte de données de connectivité et l'étape de collecte de données de connexion peuvent donner les moyens au procédé de s'adapter à la diversité des objets connectés, à l'ajout ou au retrait d'un loT ou d'un sous-réseau ou encore à l'ajout ou à la suppression d'une passerelle de connexion.

Alternativement, une passerelle de connexion peut interroger les autres passerelles de connexion des sous-réseaux afin de stocker leurs données de connectivité. Ainsi, une seule passerelle de connexion peut collecter et/ou stocker l'ensemble des données de connexion de chaque loT et l'ensemble des données de connectivité de chaque passerelle de connexion d'un ou plusieurs sous-réseaux.

Avantageusement, lorsque le module de fluidification est distinct d'une ou plusieurs passerelles de connexion, le procédé peut comprendre une étape de transmission des données de connexion collectées et de données de connectivités collectées par une ou plusieurs passerelles de connexion GW1, GW2, GW3 au module 200 de fluidification. Dans ce cas, un message de confirmation de réception des données de connexion et/ou de connectivité peut être émis par le module 200 de fluidification à destination de la ou des passerelles de connexions.

Alternativement, les étapes d'interrogation et de transmission peuvent être réalisées par un ou plusieurs loT d'un ou plusieurs sous réseaux selon l'agencement de la présente invention. En effets, le module de fluidification pourrait également être porté par un des loT.

Lorsque des données de connexion ont été collectées, et/ou stockées, le procédé peut comprendre une étape d'analyse des données de connexion collectées de façon à permettre **l'identification 130 de plusieurs périodes de temps de disponibilité,** chacune des périodes de temps de disponibilité correspondant à un ou plusieurs intervalles temporels au cours duquel un ou plusieurs d'objets connectés pourront accéder au réseau principal. C'est-à-dire de périodes de temps comprenant un ou plusieurs intervalles temporels où la consommation en bande passante est faible, de préférence inférieure à un seuil prédéterminé, où le nombre d'IoT connecté à Internet est faible, de préférence inférieur à un seuil prédéterminé, ou encore où le nombre de passerelle de connexion disponible est plus élevé, de préférence supérieure à un seuil prédéterminé.

L'analyse des données de connexion collectées peut permettre au module de fluidification de déterminer la consommation en bande passante pour chacune des passerelles de connexion par les objets connectés. De préférence, elle permet de déterminer la consommation en bande passante selon des périodes de temps. De manière encore plus préférée, elle permet de déterminer la consommation en bande passante selon des périodes de temps et par objet connecté.

Comme illustré à la figure 3, il est par exemple possible de déterminer sur quel intervalle temporel I d'une ou plusieurs périodes de temps T, la consommation en bande passante C est la plus faible ou la plus libre, de définir une consommation moyenne en bande passante pour chaque intervalle temporel pour chaque loT de chaque sous-réseau ou alternativement pour chaque réseau d'IoT de chaque sous réseau (les loTs pouvant accéder à plusieurs sous-réseaux). Par ailleurs, un intervalle temporel peut correspondre à toute unité de temps ; par exemple, seconde, minute, heure, jour, mois, an compris à l'intérieur d'une période de temps correspondant également à toute unité de temps. Par exemple une période de temps disponible peut correspondre au Lundi de 00h00 à 06h00 et un ou plusieurs intervalles temporels pouvant alors correspondre au Lundi de 00h00 à 01 h00, de 01 h01 à 2h00 etc...

Ainsi, comme illustré à la figure 3, la période de temps disponible T1 analysée pour l'IoT1, peut comprendre une pluralité d'intervalles temporels I1n qui sont fonction de la durée de connexion U1 dont IoT1 a besoin, de la nature de la connexion requise D1, de la consommation en bande passante de l'IoT1 C1 et de la disponibilité de la ou des passerelles de connexion pGW. De la même façon, la période de temps disponible T3 analysée pour l'IoT3, peut comprendre une pluralité d'intervalles temporels I3n qui sont fonction de la durée de connexion U3 dont loT3 a besoin, de la nature de la connexion requise D3, de la consommation en bande passante de l'IoT3 C3 et de la disponibilité de la ou des passerelles de connexion pGW.

Selon un mode de réalisation, un message de disponibilité R1, R3 émis par le module de fluidification peut être réceptionné par chaque loT. Ce message de disponibilité comprend de préférence au moins une période de temps disponible et au moins un intervalle temporel disponible pour chaque loT. Avantageusement, ceci permet de planifier un ou plusieurs échanges avec un réseau principal (e.g. Internet).

Avantageusement, le message de disponibilité peut comprendre l'identifiant d'une passerelle de connexion, disponible pour l'IoT, en fonction de chaque période de temps disponible contenu dans le message de disponibilité.

La réception du message de disponibilité par chaque IoT, permet à chaque loT de déterminer quelle période de temps disponible proposée par le module de fluidification lui est le plus favorable (i.e. : correspondant le mieux entre sa requête en connexion et les données renvoyées dans le message de disponibilité par le module fluidification). Ainsi, l'étape d'analyse peut comprendre l'attribution d'un score à chaque période de temps disponible ou intervalle de temps disponible proposé par le module de fluidification. Le score le plus élevé, (il faut comprendre que le score le plus élevé peut être défini comme un score élevé dans une implémentation chronologique de chiffre mais également comme le score le plus élevé, le plus bas par rapport aux autres scores), pouvant, selon un mode de réalisation permettre à l'IoT d'élire une période de temps optimale de connectivité en fonction des périodes de temps disponibles proposées par le module de fluidification, ou , avantageusement, un intervalle temporel optimal en fonction des intervalles temporel disponibles proposés par le module de fluidification. Ainsi, il faut comprendre que l'étape d'analyse permet d'une part d'identifier, de préférence par le module de fluidification, des périodes de disponibilités correspondant à un ou plusieurs intervalles temporels, ces intervalles temporels correspondant à une consommation en bande passante faible, de préférence inférieure à un seuil prédéterminé, un nombre d'IoT connecté faible, de préférence inférieur à un seuil prédéterminé, ou encore un nombre de passerelle de connexion disponible le plus élevé, de préférence supérieure à un seuil prédéterminé. D'autre part, cette étape d'analyse permet d'analyser la ou les périodes de disponibilités identifiées pour l'IoT correspondant à des périodes de temps disponibles correspondant à des intervalles de temps disponibles qui sont fonction de la consommation en bande passante, de la nature de la connexion, de la durée de connexion et de la disponibilité de passerelle de connexion afin de permettre audit loT d'élire une période de temps optimale..

Comme cela est illustré à la figure 3, le message de disponibilité R1 peut être envoyé par le module 200 de fluidification directement aux objets connectés. Alternativement il peut être envoyer aux passerelles de connexion qui pourront les envoyer aux objets connectés.

Un procédé selon l'invention peut comporter **l'établissement 140 d'un référentiel de disponibilité.** Un tel référentiel de disponibilité, mémorisé par exemple sur une mémoire de donnée, comportera une ou plusieurs périodes de temps de disponibilité pouvant être utilisés pour planifier la connexion d'objets connectés à un réseau principal. Il pourra prendre la forme d'une matrice comportant de préférence les périodes de temps de disponibilités par loT en fonction des chaque données de connectivité et de chaque données de connexion, de préférence en fonction de la nature de l'échange. Ceci permet d'optimiser la régulation et la planification des échanges et des accès à Internet.

Avantageusement, l'étape de collecte peut être réalisée en continue et l'analyse en temps réel ce qui permet aux passerelles de connexion, ou au module de fluidification, une surveillance et un traçage ininterrompus dans le temps.

Dans le cadre d'un procédé selon l'invention, les données de connexion ou les données de connectivité sont de préférence mesurées en continu. Le suivi en continu correspond par exemple à des mesures réalisées à une fréquence inférieure ou égale à une heure, de préférence inférieure ou égale à trente minutes, de façon plus préférée inférieure ou égale à cinq minutes, par exemple inférieure ou égale à dix secondes. A noter que toutes les données ne seront pas nécessairement générées ou collectées à une fréquence identique.

Ainsi, dans le cadre d'un procédé selon l'invention, l'identification 130 de plusieurs périodes de temps de disponibilité est de préférence réalisée en temps réel. En particulier, partant de la collecte des données, un procédé selon l'invention est de préférence configuré pour générer une nouvelle version de référentiel de disponibilité dans un délai inférieur ou égale à cinq minutes, de façon plus préférée inférieur ou égale à une minute, de façon encore plus préférée inférieur ou égale à dix secondes. Ainsi, un procédé selon l'invention est configuré pour définir des périodes de disponibilités en temps réel.

L'étape de collecte de données couplée à l'étape d'identification permet de déterminer quel loT est connecté, à quel moment et selon quelle durée, la consommation en bande passante utilisée (i.e. traversant le module 200 de fluidification), surveiller et tracer de façon ininterrompue dans le temps et déterminer les disponibilités de chaque passerelle de connexion à Internet.

En particulier, l'analyse des données de connexion collectées permet de cartographier les connexions de chaque loT à chaque sous-réseau. Ainsi il est possible de déterminer ce qu'il se passe en temps réel sur la pluralité de sous-réseaux. Par exemple à quel moment et sur quelle durée un ou plusieurs loTs sont connectés à Internet, leur consommation en bande passante et leur qualité de service requis durant leur connexion. Alternativement, les données de connexion peuvent être analysées pour chaque loT de chaque sous réseaux ou par réseau d'IoT au sein de chaque sous-réseau. Il est alors possible d'identifier plusieurs périodes de temps disponibles durant lesquelles certains échanges de données sont le plus propice.

De façon préférée, l'analyse des données de connexion collectées permet de cartographier les connexions de chaque IoT, et plus particulièrement la consommation en bande passante, de préférence en fonction du temps, de chaque loT. Ainsi, il est possible de déterminer une cartographie des connexions de chaque IoT, de préférence traversant les différentes passerelles. En outre, il est possible d'obtenir la consommation en bande passante utilisée et de déterminer, de préférence par le module de fluidification, plusieurs périodes de temps disponibles durant lesquelles certains échanges de données sont le plus propice.

De façon préférée, la collecte de données est réalisée sur une période d'au moins un mois. Ainsi, grâce à l'analyse des données de connexion, des modèles de connexion peuvent être crées. De préférence les modèles de connexion sont créés par le module 200 de fluidification, et peuvent correspondre à un modèle de connexion d'un loT particulier (identifier par exemple par son adresse IP), ou d'une pluralité d'IoT selon des périodes de temps disponibles ou intervalles temporels disponibles à partir des données de connexion collectées et analysées. En outre, l'analyse des données de connexion permet de cartographier les connexions pour identifier des périodes de temps disponibles selon des caractéristiques de qualités de connexions grâce aux données de connexion et données de connectivités collectées ; de préférence en fonction de la consommation en bande passante. Ainsi, la passerelle de connexion peut organiser son flux de connexion en fonction par exemple du débit, de la latence, et/ou des erreurs.

Ainsi, un procédé selon l'invention peut comporter une **étape de mise à jour 150 du référentiel de disponibilité.** Un tel référentiel de disponibilité mis à jour, mémorisé par exemple sur une mémoire de donnée, comportera une ou plusieurs périodes de temps de disponibilité pouvant être utilisés pour planifier la connexion d'objets connectés à un réseau principal.

De plus, un procédé selon l'invention peut comprendre une étape de mise à jour de la cartographie, particulièrement lors de l'ajout ou du retrait d'un loT sur un ou plusieurs sous-réseaux, des imprévus de consommation en bande passante, etc , et redéfinir des modèles de connexion. De ce fait, l'étape d'analyse de données de connexion collectées permet également d'identifier des modèles de connexion.

Un procédé selon l'invention comporte également une étape de **réception 160 d'au moins un message de requête de connexion d'un objet connecté** loT1, loT2 appartenant à au moins un des sous-réseaux.

Le message de requête de connexion peut notamment comporter des données de caractéristiques de la connexion requise.

L'objet connecté devant se connecter à Internet peut émettre un message de requête de connexion Q1 à destination du module de fluidification. Le message de requête de connexion Q1 peut contenir des données de caractéristiques de la connexion requise portant sur :
- la nature de la connexion telle que volume, durée, nombre de connexions, protocole utilisé, fréquence d'utilisation,
- la date de la connexion souhaitée,
- La durée et/ou l'heure de la connexion souhaitée,
- La qualité de service attendue,
- La consommation en bande passante requise (émission et réception),
- La nature de l'échange,
- un type de message (par exemple le type « données » dans l'exemple considéré ici) ;
- un identifiant unique de l'IoT (par exemple son adresse IP)
- un identifiant unique de la ou des passerelles de connexions,
- un code d'application identifiant l'application émettrice du message de requête envoyé, et un numéro unique du message incrémenté (en cas de retransmission du même message ou requête Q1) ;
- des données applicatives ;
- une somme de contrôle (« Checksum » en anglais) permettant de valider l'intégrité du message transmis, et/ou
- La date d'expiration.

De préférence, le message de requête de connexion Q1 contient des données de caractéristiques de la connexion requise sur :
- la nature de la connexion telle que volume, fréquence d'utilisation,
- la date de la connexion souhaitée,
- La qualité de service attendue,
- La consommation en bande passante requise (émission et réception),
- La nature de l'échange, et/ou
- un identifiant unique de l'IoT (par exemple son adresse IP).

De préférence, le message de requête de connexion Q1 contient des données de caractéristiques de la connexion requise sur :
- une nature de la connexion telle que volume, fréquence d'utilisation,
- une date de la connexion souhaitée,
- un niveau d'urgence, et
- un niveau de qualité de service attendu.

Ainsi un procédé selon l'invention peut comprendre une étape de réception d'au moins un message de requête de connexion Q1 d'un objet connecté au réseau principal, ledit message de requête de connexion comportant des données de caractéristiques de la connexion requise pour établir sa connexion à un réseau principal et plus particulièrement son accès à Internet. De préférence le message de requête de connexion est reçu par le module 200 de fluidification.

Le message de requête de connexion Q1 peut comprendre selon un mode de réalisation une fréquence d'utilisation F. Une telle fréquence d'utilisation peut correspondre à une répétition dans le temps d'une connexion à Internet d'un objet connecté. Par exemple, un objet connecté souhaite se connecter tous les jours à 14 heures à Internet. De préférence une fréquence d'utilisation est répétitive dans le temps, c'est-à-dire récurrente, cyclique, itérative ou régulière. En outre, la fréquence d'utilisation peut être définie comme une répétition sur une période de temps déterminée. Par exemple, un objet connecté souhaite se connecter à Internet tous les 2 jours pendant 15 jours.

Par exemple, un loT qui indique qu'il se connectera tous les jours pendant 2 semaines à Internet. Si l'IoT indique qu'il y aura une fréquence d'utilisation de connexion, alors le module de fluidification prend en compte l'ensemble de ces occurrences sur la période de temps indiquée (ici 2 semaines) afin de déterminer des périodes de temps disponible selon lesdites occurrences requises par l'IoT.

En outre, le message de requête de connexion peut préciser la nature de l'échange avec Internet, par exemple un téléchargement, une mise à jour, etc... La nature de l'échange influençant la durée de connexion ou la consommation en bande passante par exemple, le module de fluidification peut, selon un mode de réalisation, déterminer un modèle de connexion en fonction de la nature de l'échange et déterminer des périodes de temps disponibles.

Comme illustré à la figure 3, le message de requête de connexion Q1 est à destination du module de fluidification. De préférence, un message de requête Q2A transite au travers des passerelles disponibles GWT2 avant d'être envoyé par une passerelle de connexion GWT2 sous la forme d'un message de requête Q2B au module de fluidification. Avantageusement, ce message de requête est transmis au module de fluidification dans la période de temps ou dans l'intervalle temporel qui est élu par l'IoT.

De préférence, le message de requête comprend également l'identifiant de l'IoT et le niveau de priorité de l'IoT.

Selon un mode de réalisation, le procédé de régulation selon l'invention peut comprendre une **étape 170 de classement des messages de requête de connexion** en fonction d'une fonction de priorisation floT des messages de requête de connexion. De préférence, le classement des messages de requête de connexion est réalisé en fonction des données que comprend le message de requête de connexion. Ainsi, l'étape de classement des messages de requête de connexion, permet au module de fluidification de déterminer une planification dans le temps (i.e. en fonction des périodes de temps disponible) des accès à Internet en fonction des données de connexion. En particulier l'étape de classement des messages de requête de connexion, de préférence par le module de fluidification, comprend l'attribution de niveaux de priorité pour chaque message de requête de connexion par le module de fluidification par l'exécution d'au moins une fonction de priorisation *f*IoT.

En outre, cette étape de classement des messages de requête de connexion peut également comporter une étape de classement d'objets connectés. Un classement des loTs peut être réalisé afin de déterminer quel loT se connecte en premier selon les périodes de temps disponibles et les besoins de connexion dudit loT (i.e. données de caractéristiques de connexion requise, nature de l'échange, durée, consommation et utilisation en bande passante) par rapport à un autre loT d'un même sous réseau ou d'un sous réseau différent. Ceci permet de calculer des niveaux de priorité pour chaque objet connecté de chaque sous-réseau. Le module de fluidification détermine ainsi quel loT est prioritaire et classe chaque loT en fonction de leur niveau de priorité attribué.

De préférence, le module de fluidification détermine également par l'intermédiaire de quelle passerelle de connexion montante et/ou descendante l'IoT pourra se connecter en fonction des données de connectivité.

Dans un exemple de mise en oeuvre non limitatif d'un procédé conforme à l'invention, les données de connexion, propres à chaque loT ou chaque message de requête de connexion qui sont prises en compte pour le calcul de leur niveau de priorité, comprennent notamment et de manière non limitative :
- Un indice de sécurisation de la transmission,
- Un indice de qualité de la connectivité, par exemple un taux moyen d'erreur sur les bits, un temps de latence constaté, et/ou
- Un débit de transmission associé à la passerelle considérée ;
- Une heure à laquelle l'accès à Internet est désiré,
- Une durée pendant laquelle l'accès à Internet est demandé
- Un niveau d'utilisation de la bande passante
- Une nature de la connexion,
- Un niveau de qualité de service requis
- Un identifiant,
- Une fréquence d'utilisation, et/ou
- Une nature de l'échange.

De façon préférée, les données de connexion, propres à chaque loT ou chaque message de requête de connexion qui sont prises en compte pour le calcul de leur niveau de priorité, comprennent notamment et de manière non limitative :
- Un indice de sécurisation de la transmission,
- Un niveau qualité de service requis
- Un identifiant,
- Une fréquence d'utilisation, et/ou
- Une nature de l'échange.

Avantageusement, les données de connexion, propres à chaque loT ou chaque message de requête de connexion qui sont prises en compte pour le calcul de leur niveau de priorité, comprennent notamment et de manière non limitative :
- Un niveau qualité de service requis, et
- Un identifiant,

Dans un exemple de mise en oeuvre d'un procédé conforme à l'invention illustré à la figure 3, deux fonctions de priorisation *ƒ*Iot1 et *f*IoT2 ont été mémorisées par le module de fluidification en vue de leur utilisation par ledit module de fluidification pour le calcul de deux niveaux de priorité (i.e. un par message de requête de connexion, *f*IoT1 pour le message Q1 de l'IoT1 et *f*IoT2, pour le message Q1 de l'IoT2) pour chaque loT sur la base des données de connectivité des passerelles, des données de connexion des IoTs, des données contenues dans chaque message de requête de connexion de chaque loT et des périodes de temps de disponibilité, de préférence des périodes de temps disponibles, des intervalles temporels disponibles. Par exemple, la fonction de priorisation *f*IoT1 permet le calcul de niveau de priorité de l'IoT1 tandis que la fonction de priorisation *f*IoT2 permet le calcul de niveau de priorité de l'IoT2, tels que présentés en lien avec la figure 2.

Alternativement, une seule fonction de priorisation pourrait être utilisée dès lors, par exemple, qu'elle comporte une variable se référant à chaque loT et qu'elle peut donc produire plusieurs niveaux de priorité. Ces calculs utilisent donc des fonctions de priorisation sur la base de données de connectivité pGW1, pGW2 de chaque passerelle GW1, GW2, sur la base des données du message de requête de connexion, D, F, U, C et des périodes de temps de disponibles T1, T2, I1, I2. Ainsi, les niveaux de priorité qui sont obtenus sont des valeurs véritablement comparables en l'occurrence deux à deux.

Par exemple, l'IoT1 ayant besoin de se connecter à Internet pour le téléchargement d'une application et l'IoT2 pour sa mise à jour, l'IoT1 présentant une durée de connexion plus faible que la durée de connexion de l'IoT2, la nature de l'échange de l'IoT 1 étant favorisé par rapport à la nature de l'échange de l'IoT2, la consommation en bande passante étant plus faible pour l'IoT1 que pour l'IoT2 et les disponibilité de la passerelle pGW1 étant plus avantageux que pGW2, la fonction de priorisation détermine un niveau de priorité supérieur pour loT1 que pour l'IoT2 P(*f*IoT1) > P(*f*IoT2).

Le procédé peut alors comprendre **une étape 180 de régulation de connexion de la pluralité d'objets connectés aux sous-réseaux.**

Lors de la réception du message de requête de connexion par le module de fluidification, une étape de vérification des données contenues dans le message de requête Q2 avec les données enregistrées et/ou stockées peut être réalisée par le module de fluidification. Ainsi, le procédé peut comprendre la vérification du niveau de priorité, et de l'identifiant de l'IoT.

En outre, l'étape de régulation peut être fonction des périodes de temps de disponibilités, des données de connexion collectées et analysées, des données des messages de requêtes de connexion Q1 et Q2, des niveaux de priorités et des données du message de disponibilité R1.

De façon préférée, l'étape 180 de régulation de la connexion de la pluralité d'objets connectés aux sous-réseaux peut être fonction de la cartographie des flux traversant les différentes passerelles de connexion En effet, la consommation en bande passante, de préférence en fonction du temps, de chaque IoT, collectée et analysée permet de déterminer des périodes de temps disponibles qui pourront être proposées à l'IoT ayant émis le message de requête de connexion.

Selon un mode de réalisation, l'étape de régulation est fonction des périodes de temps de disponibilité et des données de caractéristiques de la connexion requise.

L'étape de régulation permet ainsi de contrôler, vérifier et planifier les accès à Internet, de préférence par le module de fluidification. Lorsque les données sont vérifiées, la régulation est réalisée par le module de fluidification.

Par exemple, si l'IoT1 comprend un niveau de priorité supérieur à l'IoT3, et si sa période de temps disponible T1 élue est bien disponible, le module de fluidification régule l'accès à Internet R2A. Autrement dit, la connexion de l'IoT1 à Internet sera régulée par le module de fluidification de sorte que la connexion à Internet de l'IoT1 pour l'envoi du message Q2C soit réalisée avant la connexion à Internet de l'IoT3.

Alternativement, d'autres conditions peuvent être contrôlées et vérifiées telles que l'identifiant du module de fluidification, la nature de la connexion requise par l'IoT1.

Selon un mode de réalisation, le procédé de régulation peut comprendre une étape de rejet de connexion, par le module de fluidification. Ainsi, lorsque le message de requête de connexion est réceptionné par le module de fluidification en dehors de la période de temps disponible, le module de fluidification est configuré pour renvoyé le message de requête de connexion vers l'IoT ayant émis ledit message de requête de connexion. Alternativement, le message de requête de connexion peut être mis en attente jusqu'à ce que la période de temps disponible concorde avec le message de requête de connexion. Ainsi, l'étape de régulation de connexion de la pluralité d'objets connectés peut prendre en considération le ou les messages de requête de connexion en attente. Selon une autre alternative, lorsque le message de requête de connexion est renvoyé à l'IoT l'ayant émis, le procédé selon l'invention peut recommencer à l'étape de réception d'au moins un message de requête de connexion par ledit loT.

Selon un mode de réalisation, lorsque deux loTs présentent les mêmes périodes de disponibilités, et les mêmes données de caractéristiques de connexion, les connexions sont régulées en fonction des niveaux de priorité des objets connectés ou des messages de requête de connexion.

Selon un autre mode de réalisation, les connexions peuvent être régulées en fonction des données de connexion et plus précisément en fonction de la durée de connexion et de la consommation en bande passante. Ainsi, l'IoT ayant une durée de connexion plus courte ou une consommation moindre de bande passante, aura accès prioritairement à Internet, par le module de fluidification.

Selon un mode de réalisation, le procédé de régulation comprend une étape de surveillance en continu de la consommation en bande passante, de la disponibilité des passerelles, de la qualité de la connectivité pour chaque passerelle, de l'utilisation de la connectivité par les objets connectés. Ceci permet d'assurer le bon fonctionnement du procédé et d'optimiser la régulation et la planification des échanges avec Internet.

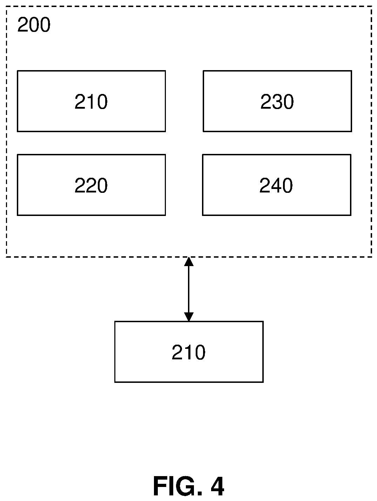

Selon un autre aspect, et comme illustré à la **figure 4****,** l'invention se rapporte à **un module 200 de fluidification** pour la régulation de la connectivité d'une pluralité d'objets connectés, lesdits objets connectés appartenant à des sous-réseaux connectés à un réseau principal par l'intermédiaire de passerelles de connexion.

Le module 200 de fluidification peut comprendre un ou plusieurs composants ou modules destinés à, de préférence configurés pour, la régulation de la connectivité pour une pluralité d'objets connectés, appartenant à des sous-réseaux connectés à un réseau principal par l'intermédiaire de passerelles de connexion.

Ainsi, selon un mode de réalisation, le module de fluidification peut comprendre ou être couplé à **un ou plusieurs moyens 210 de collecte de données.** Un moyen 210 de collecte de données peut comprendre une ou plusieurs sondes afin de collecter les données de connexion de chaque loT et les données de connectivités des passerelles de connexions. La ou les sondes permettent de collecter des données sur des loTs ou des passerelles en temps réel et en continu. Le moyen 210 de collecte peut faire appel à un fichier de surveillance comportant des règles de collecte de métriques. Ces règles de collecte de métriques peuvent spécifier des données qui doivent être enregistrées lors de l'exécution de la brique applicative.

Les sondes peuvent être associées à chaque donnée de connectivité ou données de connexion (e.g. durée de connexion, nature de l'échange ou fonctionnalités) pour remonter les informations de mesure ou métriques.

Pour chaque donnée de connectivité ou donnée de connexion, la ou les sondes définissent un identifiant et une valeur. Les données de connectivité et les données de connexion peuvent être suivies en continu ou à des intervalles configurables de façon à obtenir des informations pour chaque donnée en fonction du temps. Ces informations peuvent être stockées dans une mémoire. Dans certains modes de réalisation, une interface homme-machine permet de définir les sondes sur chaque machine qui remontent les métriques.

De préférence un moyen de collecte de données collecte les données en temps réel et en continu.

Un moyen de collecte de données est apte à collecter les données directement à partir des loTs mais également à partir des passerelles de connexion. En outre, un moyen de collecte de données est de préférence apte à collecter les données des loTs de chaque sous-réseau, ou d'un loT par lequel converge l'ensemble des données de connectivités de chaque loT de chaque sous-réseau, ou des passerelles de connexion ou d'une seule passerelle de connexion.

Le moyen de collecte de donnés peut comprendre, en outre, une mémoire, un référentiel, un espace de stockage afin d'enregistrer, de préférence en temps réel et en continu les données collectées par les sondes.

Selon un mode de réalisation, le module de fluidification peut comprendre ou être couplé à **un ou plusieurs processeurs 220.** Un processeur 220 peut être configuré pour manipuler des tables de routage, des gestionnaires de bandes passantes, des contrôleurs, des calculateurs et des ordonnanceurs. De préférence, le ou les processeurs 220 sont aptes à, de préférence configurés pour, déterminer des périodes de temps de disponibilité d'accès à Internet. Les données de connexion et les données de connectivité sont collectées puis sont analysées par le module 200 de fluidification qui détermine les périodes de temps disponibles. En outre, le ou les processeurs sont aptes à, de préférence configurés pour, déterminer des modèles de connexion, en fonction des données de connexion et des données de connectivité collectées et analysées. De plus, le ou les processeurs peuvent être aptes à, de préférence configurés pour, analyser les données de connexion de chaque objet connecté et les données de connectivité de chaque passerelle de connexion. En outre, un processeur 220 est apte à, de préférence configuré pour, planifier en continu et en temps réel des périodes de disponibilités et des périodes de temps disponibles.

Selon un mode de réalisation, le ou les processeurs peuvent être aptes à, de préférence configurés pour, réguler ou planifier les connexions tant en liaison montante qu'en liaison descendante ; c'est à dire tant en émission qu'en réception.

Selon un mode de réalisation, le ou les processeurs peuvent comprendre un gestionnaire de bande passante. Le gestionnaire de bande passante peut prendre en compte les données de nature de connexion, les plages de disponibilité et les niveaux de priorité de chaque loT.

Le gestionnaire de bande passante peut également être apte à, de préférence configuré pour, mettre en file d'attente les loTs authentifiés par le module de fluidification, dans le cas où un loT ne se serait pas connecté selon la période de disponibilité qu'il lui a été transmise par le module de fluidification ou la période de temps disponible n'étant plus disponible.

Le gestionnaire de bande passante peut être configuré spécifiquement pour des liaisons montantes mais également pour des liaisons descendantes. Alternativement, un processeur peut comprendre plusieurs gestionnaires de bande passantes.

Ainsi, selon un mode de réalisation, le module de fluidification, est apte à, de préférence configuré pour, analyser les données de connexion collectées de façon à identifier plusieurs périodes de temps de disponibilité, chacune des périodes de temps de disponibilité correspondant à un intervalle temporel au cours duquel un ou plusieurs objets connectés pourront accéder au réseau principal. Les données analysées sont de préférence enregistrées, stockées par le module de fluidification. De préférence le module de fluidification, est apte à, de préférence configuré pour, également analyser les données de connectivité collectées de façon à identifier plusieurs passerelles de connexion disponible, chacune des passerelles de connexion disponibles correspondant à une période de temps disponible ou un intervalle temporel au cours duquel un ou plusieurs objets connectés pourront accéder au réseau principal par ladite passerelle de connexion disponible. Les données analysées sont de préférence enregistrées, stockées par le module de fluidification.

En outre, le module 200 de fluidification peut comprendre ou être couplé à une ou plusieurs **mémoires 230 de données** aptes à, de préférence configurées pour, enregistrer, stocker les données analysées. Par exemple, une mémoire de données peut comprendre un référentiel de disponibilité.

Une mémoire de données peut avantageusement comporter une section non effaçable, physiquement isolée ou simplement agencée pour qu'un accès en écriture ou en effacement soit proscrit. Une mémoire de données peut en outre être agencée pour enregistrer les données mesurées par les sondes. Une mémoire de données peut en outre comprendre un ou plusieurs programmes, ou plus généralement un ou plusieurs ensembles d'instructions de programmes, lesdites instructions de programmes étant intelligibles par le processeur. L'exécution ou l'interprétation desdites instructions par ledit processeur provoque la détermination des périodes de temps de disponibilité d'accès à Internet.

De façon préférée, une mémoire de données est configurée pour mémoriser les modèles de connexion.

En outre, selon un mode de réalisation ; la mémoire de données est configurée pour mémoriser des règles de collectes, des données de connexion et de connectivité.

La mémoire de données peut en outre être configurée pour mémoriser les valeurs des paramètres de connectivité et des données de connexions ainsi que les informations obtenues pour chaque paramètres et données, de préférence en fonction du temps.

Selon un mode de réalisation, le module de fluidification 200 peut comprendre ou être couplé à un ou plusieurs **moyens 240 de communication.** Un moyen 240 de communication peut en particulier être configuré pour recevoir des messages de requête et envoyer des messages de réponse. Par exemple, il peut s'agir d'adresse IP d'émission ou de destination, de port, de passerelle de connexion, utilisant des protocoles de communications adaptés filaire ou non filaire, par exemple TCP (Transport Control Protocol en terminologie anglo-saxonne),TCP/IP, RTP (Real Time Transport Protocol en terminologie anglo-saxonne), UDP (User Data Protocol en terminologie anglo-saxonne), SCTP (Stream Control Transmission Protocol en terminologie anglo-saxonne) afin de transmettre un message de réponse ou de réceptionner un message de requête. De préférence, les transmissions sont réalisées par l'intermédiaire de passerelles de connexion.

**Selon un autre aspect,** l'invention concerne **un objet connecté** comprenant un module de fluidification selon l'invention. Selon un mode de réalisation, l'objet connecté peut comprendre un ou plusieurs autres modules (i.e. : un module de collecte de données, un module d'analyse de données, des moyens de réception de message de requête et des moyens d'émission, un module de régulation de connexion). Selon un agencement particulier, le ou les plusieurs autres modules peuvent être compris par le module de fluidification.

**Selon un autre aspect,** l'invention concerne **une passerelle de connexion** comprenant un module de fluidification selon l'invention.

La passerelle de connexion peut être une passerelle de connexion d'un sous-réseau à un réseau central, une passerelle de connexion entre loT d'un même sous-réseau ou de plusieurs sous-réseaux.

En outre, une passerelle de connexion est avantageusement accessible par un objet connecté selon l'invention. Les passerelles peuvent transmettre un message envoyé par un objet connecté loT1 ou un module de fluidification. Les passerelles de connexion peuvent également transmettre un message à d'autres passerelles de connexion.

En particulier, les passerelles sont configurées pour envoyer un message en réponse au message d'interrogation BCM de l'objet connecté ou du module de fluidification. Ces messages comportent notamment des données de connectivité des passerelles et une valeur de durée de validité desdites données de connectivité.

**Selon un autre aspect** l'invention se rapporte à **un système de régulation** de la connectivité pour une pluralité d'objets connectés appartenant à des sous-réseaux connectés à un réseau principal par l'intermédiaire de passerelles de connexion, ledit système comprenant au moins un module de fluidification tel que décrit précédemment, au moins un objet, au moins une passerelle de connexion.

Un tel système peut comprendre une pluralité de sous-réseaux locaux, une ou plusieurs passerelles de connexion, un ou plusieurs modules de fluidifications, une pluralité d'loTs, et au moins un réseau principal (i.e. Internet).

De préférence, un tel système peut comprendre au moins un module de fluidification selon l'invention, au moins deux objets connectées et au moins deux passerelles de connexion.

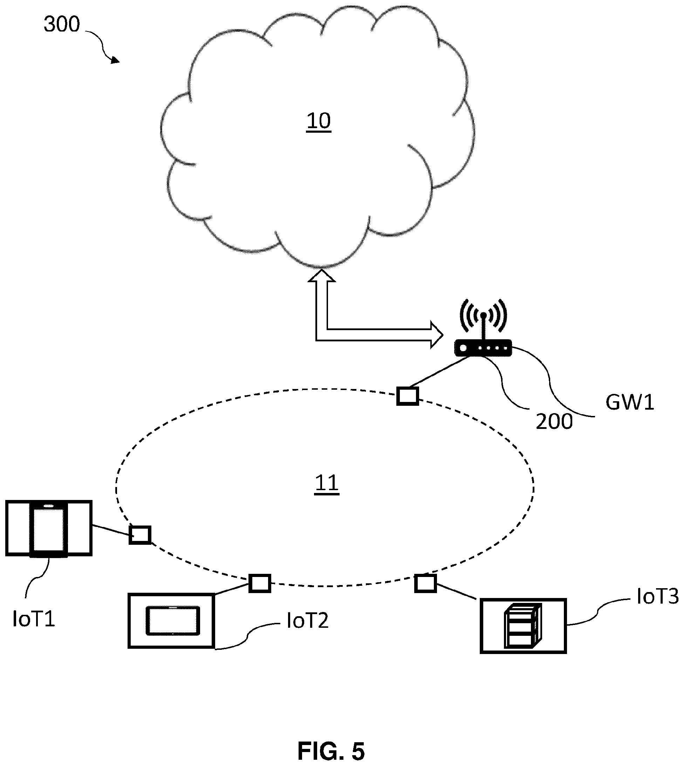

Un tel système peut en particulier comprendre une pluralité d'agencement tel qu'illustrés aux figures 5 à 8 ou tout autres modes d'agencements non illustrés aptes à réguler et planifier la connexion d'une pluralité d'lots à un réseau principal, par exemple à Internet.

En outre, un tel système est particulièrement adapté pour la mise en oeuvre du procédé selon l'invention.

Selon un mode de réalisation, un seul module de fluidification peut être présent pour plusieurs IoT, le module pouvant être agencé au niveau d'une passerelle de connexion tel qu'illustré à **la** **figure 5****.**

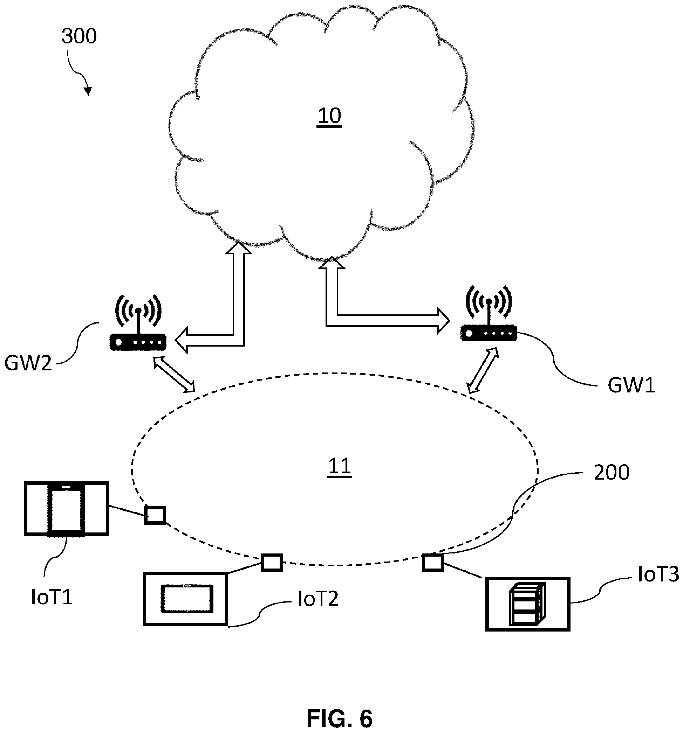

Selon un autre mode de réalisation, illustré à la **figure 6****,** plusieurs modules 200 de fluidification peuvent être présents pour plusieurs IoTs, chaque module de fluidification pouvant être agencé sur chaque loT. De préférence au niveau des couches de transports. Dans ce mode de réalisation, le module 200 de fluidification est configuré pour élire la passerelle de connexion disponible parmi plusieurs passerelles de connexion. De préférence, le module de fluidification 200 est configuré pour élire la passerelle de connexion disponible parmi plusieurs passerelles de connexion selon les données de connectivité de chaque passerelle de connexion.

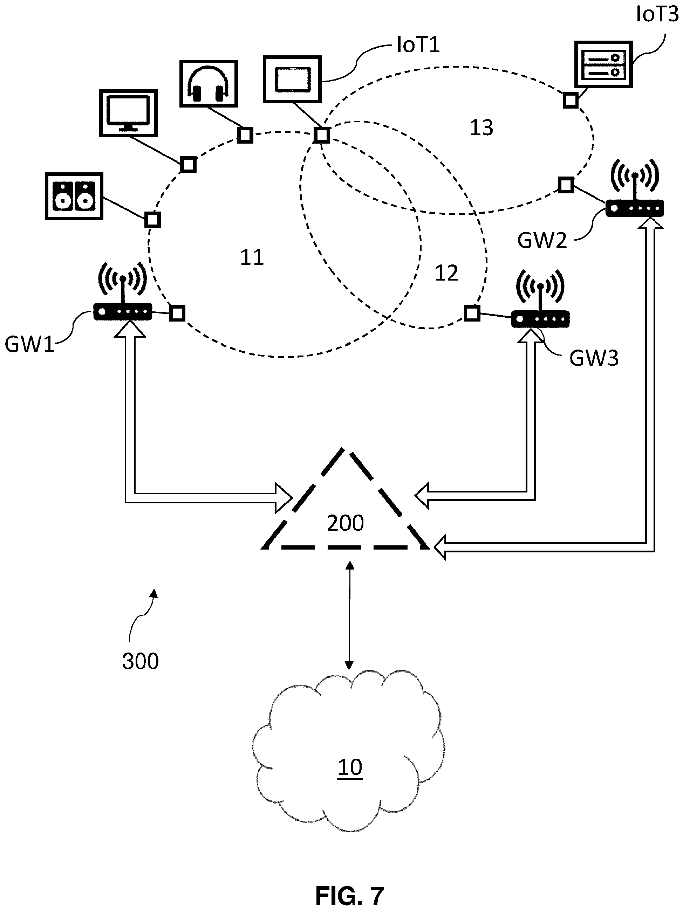

Selon un autre mode de réalisation, illustré à la **figure 7****,** le module de fluidification peut être configuré pour être agencé entre Internet et les sous-réseaux locaux. De préférence, le module 200 de fluidification ne fait pas parti du réseau central (i.e. Internet) pour des raisons de sécurité et de confidentialité. Les passerelles de connexions convergent alors vers le module de fluidification qui communique par la suite avec Internet.

Dans ce mode de réalisation, un hôte peut être prévu pour héberger le module de fluidification.

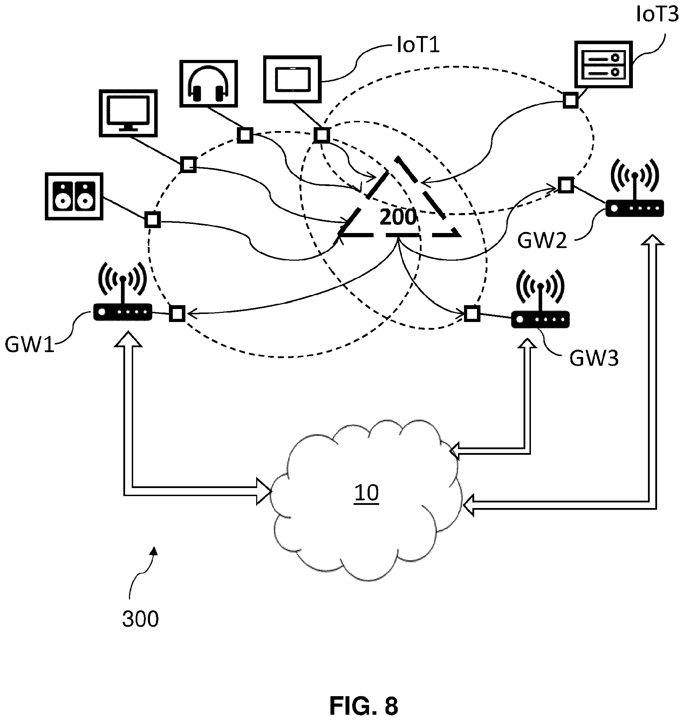

**La** **figure 8** illustre un autre de mode de réalisation, dans lequel, les loTs de chaque sous-réseau convergent vers le module de fluidification 200, qui régule l'accès aux passerelles de connexions avant l'accès à un réseau principal 10.

Les modes de réalisation illustrés aux figures 5 à 8 ne sont pas limitatifs et d'autres modes de réalisation et plus précisément d'agencement peuvent être réalisés. L'invention ne se limite pas à l'agencement du module de fluidification.

## Revendications

1. Procédé de régulation (100) de la connectivité pour une pluralité d'objets connectés, lesdits objets connectés appartenant à des sous-réseaux (11,12,13) connectés à un réseau principal (10) par l'intermédiaire de passerelles de connexion (GW1, GW2, GW3), ledit procédé étant mis en oeuvre par un module (200) de fluidification, ledit procédé (100) comprenant :
- Une étape de collecte (120) de données de connexion de la pluralité d'objets connectés (loT1, loT3) ;
- Une étape d'analyse (130) des données de connexion collectées de façon à identifier plusieurs périodes de temps de disponibilité, chacune des périodes de temps de disponibilité correspondant à un intervalle temporel au cours duquel un ou plusieurs d'objets connectés pourront accéder au réseau principal;
- Une étape de réception (160) d'au moins un message de requête de connexion (Q1) d'un objet connecté (loT1, loT2, loT3) au réseau principal, ledit message de requête de connexion comportant des données de caractéristiques de la connexion requise ; et
- Une étape de régulation (180) de connexion de la pluralité d'objets connectés au réseau principal (10) en fonction des périodes de temps de disponibilité et des données de caractéristiques de la connexion requise.

2. Procédé de régulation (100) selon la revendication 1, **caractérisé en ce qu'**il comporte une étape de collecte (125) de données de connectivité des passerelles de connexion (GW1,GW2,GW3).

3. Procédé de régulation (100) selon la revendication 2, **caractérisé en ce que** la collecte des données de connexion de la pluralité d'objets connectés et des données de connectivités des passerelles de connexion est réalisée en continu.

4. Procédé de régulation (100) selon l'une des revendications 1 à 3, **caractérisé en ce que** la ou les étapes de collecte de données comprennent la collecte d'au moins une donnée de consommation en bande passante ou de disponibilité des passerelles de connexion.

5. Procédé de régulation (100) selon l'une des revendications précédentes, **caractérisé en ce que** qu'il comporte une étape d'établissement (140) d'un référentiel de disponibilité.

6. Procédé de régulation (100) selon la revendication 5, **caractérisé en ce qu'**il comporte une étape de mise à jour (150) du référentiel de disponibilité.

7. Procédé de régulation (100) selon l'une des revendications précédentes, **caractérisé en ce que** le message de requête de connexion (Q1) comprend une fréquence d'utilisation.

8. Procédé de régulation (100) selon l'une des revendications précédentes, **caractérisé en ce qu'**il comprend une étape d'interrogation du module (200) de fluidification, par un objet connecté de la pluralité d'objets connectés, pour l'obtention d'une période de temps disponible.

9. Procédé de régulation (100) selon l'une des revendications précédentes, **caractérisé en ce qu'**il comprend une étape de classement (170) des objets connectés en fonction d'une fonction de priorisation (*f*) d'objets connectés.

10. Procédé de régulation (100) selon l'une des revendications précédentes, **caractérisé en ce qu'**il comprend une étape d'élection (181), par le module (200) de fluidification, d'une période de temps optimale de disponibilité en fonction des périodes de temps de disponibilité identifiées.

11. Procédé de régulation (100) selon l'une des revendications précédentes, **caractérisé en ce qu'**il comprend une étape d'élection (182), par un objet connecté de la pluralité d'objets connectés, d'une période de temps optimale de disponibilité en fonction des périodes de temps de disponibilité identifiées.

12. Module de fluidification (200) pour la régulation de la connectivité pour une pluralité d'objets connectés appartenant à des sous-réseaux (11,12,13) connectés à un réseau principal (10) par l'intermédiaire de passerelles de connexion (GW1,GW2,GW3), ledit module de fluidification étant configuré pour :
- Collecter des données de connexion de la pluralité d'objets connectés,
- Analyser les données de connexion collectées de façon à identifier plusieurs périodes de temps de disponibilité, chacune des périodes de temps de disponibilité correspondant à un intervalle temporel au cours duquel un ou plusieurs objets connectés pourront accéder au réseau principal,
- Réceptionner au moins un message de requête de connexion (Q1) d'un objet connecté au réseau principal, ledit message de requête de connexion comportant des données de caractéristiques de la connexion requise, et
- Réguler la connexion de la pluralité d'objets connectés au réseau principal (10) en fonction des périodes de temps de disponibilité et des données de caractéristiques de la connexion requise.

13. Passerelle de connexion (GW1,GW2,GW3) comprenant un module (200) de fluidification selon la revendication 12.

14. Système de régulation de la connectivité pour une pluralité d'objets connectés, appartenant à des sous-réseaux (11,12,13) connectés à un réseau principal (10) par l'intermédiaire de passerelles de connexion (GW1,GW2,GW3), ledit système comprenant au moins un module de fluidification (200) selon la revendication 12, au moins deux objets connectés et au moins deux passerelles de connexion.

## Patentansprüche

1. Verfahren zur Konnektivitätssteuerung (100) für eine Vielzahl von verbundenen Objekten, wobei die verbundenen Objekte zu Subnetzen (11, 12, 13) gehören, die über Verbindungsgateways (GW1, GW2, GW3) mit einem Hauptnetz (10) verbunden sind, wobei das Verfahren von einem Fluidisierungsmodul (200) implementiert wird, wobei das Verfahren (100) umfasst:
- einen Schritt des Sammelns (120) von Verbindungsdaten der Vielzahl von verbundenen Objekten (loT1, loT3);
- einen Schritt des Analysierens (130) der gesammelten Verbindungsdaten, um mehrere Verfügbarkeitszeiträume zu identifizieren, wobei jeder der Verfügbarkeitszeiträume einem Zeitintervall entspricht, in dem eines oder mehrere der verbundenen Objekte auf das Hauptnetz zugreifen können;
- einen Schritt des Empfangens (160) mindestens einer Verbindungsanforderungsnachricht (Q1) von einem mit dem Hauptnetz verbundenen Objekt (IoT1, IoT2, IoT3), wobei die Verbindungsanforderungsnachricht Daten von Merkmalen der erforderlichen Verbindung einschließt; und
- einen Schritt des Steuerns (180) der Verbindung der Vielzahl von verbundenen Objekten mit dem Hauptnetz (10) in Abhängigkeit von den Verfügbarkeitszeiträumen und den Daten von Merkmalen der erforderlichen Verbindung.

2. Steuerungsverfahren (100) nach Anspruch 1,
**dadurch gekennzeichnet, dass** es einen Schritt des Sammelns (125) von Konnektivitätsdaten der Verbindungsgateways (GW1, GW2, GW3) einschließt.

3. Steuerungsverfahren (100) nach Anspruch 2,
**dadurch gekennzeichnet, dass** das Sammeln der Verbindungsdaten der Vielzahl von verbundenen Objekten und der Konnektivitätsdaten der Verbindungsgateways kontinuierlich durchgeführt wird.

4. Steuerungsverfahren (100) nach einem der Ansprüche 1 bis 3, **dadurch gekennzeichnet, dass** der Schritt oder die Schritte des Sammelns von Daten das Sammeln von mindestens einem Datenwert zum Bandbreitenverbrauch oder zur Verfügbarkeit der Verbindungsgateways umfasst.

5. Steuerungsverfahren (100) nach einem der vorstehenden Ansprüche, **dadurch gekennzeichnet, dass** es einen Schritt des Erstellens (140) eines Verfügbarkeits-Repositories einschließt.

6. Steuerungsverfahren (100) nach Anspruch 5,
**dadurch gekennzeichnet, dass** es einen Schritt des Aktualisierens (150) des Verfügbarkeits-Repositories einschließt.

7. Steuerungsverfahren (100) nach einem der vorstehenden Ansprüche, **dadurch gekennzeichnet, dass** die Verbindungsanforderungsnachricht (Q1) eine Nutzungsfrequenz umfasst.

8. Steuerungsverfahren (100) nach einem der vorstehenden Ansprüche, **dadurch gekennzeichnet, dass** es einen Schritt eines Abfragens des Fluidisierungsmoduls (200) durch ein verbundenes Objekt aus der Vielzahl von verbundenen Objekten umfasst, um einen verfügbaren Zeitraum zu erhalten.

9. Steuerungsverfahren (100) nach einem der vorstehenden Ansprüche, **dadurch gekennzeichnet, dass** es einen Schritt eines Klassifizierens (170) der verbundenen Objekte in Abhängigkeit von einer Priorisierungsfunktion (*f*) für verbundene Objekte umfasst.

10. Steuerungsverfahren (100) nach einem der vorstehenden Ansprüche, **dadurch gekennzeichnet, dass** es einen Schritt eines Auswählens (181) eines optimalen Verfügbarkeitszeitraums durch das Fluidisierungsmodul (200) in Abhängigkeit von den identifizierten Verfügbarkeitszeiträumen umfasst.

11. Steuerungsverfahren (100) nach einem der vorstehenden Ansprüche, **dadurch gekennzeichnet, dass** es einen Schritt des Auswählens (182) eines optimalen Verfügbarkeitszeitraums durch ein verbundenes Objekt aus der Vielzahl von verbundenen Objekten in Abhängigkeit von den identifizierten Verfügbarkeitszeiträumen umfasst.

12. Fluidisierungsmodul (200) zur Konnektivitätssteuerung für eine Vielzahl von verbundenen Objekten, die zu Subnetzen (11, 12, 13) gehören, die über Verbindungsgateways (GW1, GW2, GW3) mit einem Hauptnetz (10) verbunden sind, wobei das Fluidisierungsmodul konfiguriert ist zum:
- Sammeln von Verbindungsdaten der Vielzahl von verbundenen Objekten,
- Analysieren der gesammelten Verbindungsdaten, um mehrere Verfügbarkeitszeiträume zu identifizieren, wobei jeder der Verfügbarkeitszeiträume einem Zeitintervall entspricht, in dem eines oder mehrere der verbundenen Objekte auf das Hauptnetz zugreifen können,
- Empfangen mindestens einer Verbindungsanforderungsnachricht (Q1) von einem mit dem Hauptnetz verbundenen Objekt, wobei die Verbindungsanforderungsnachricht Daten von Merkmalen der erforderlichen Verbindung einschließt, und
- Steuern der Verbindung der Vielzahl von verbundenen Objekten mit dem Hauptnetz (10) in Abhängigkeit von den Verfügbarkeitszeiträumen und den Daten von Merkmalen der erforderlichen Verbindung.

13. Verbindungsgateway (GW1, GW2, GW3), umfassend ein Fluidisierungsmodul (200) nach Anspruch 12.

14. System zur Konnektivitätssteuerung für eine Vielzahl von verbundenen Objekten, die zu Subnetzen (11, 12, 13) gehören, die über Verbindungsgateways (GW1, GW2, GW3) mit einem Hauptnetz (10) verbunden sind, wobei das System mindestens ein Fluidisierungsmodul (200) nach Anspruch 12, mindestens zwei verbundene Objekte und mindestens zwei Verbindungsgateways umfasst.

## Claims

1. Method (100) for regulating connectivity for a plurality of connected objects, said connected objects belonging to sub-networks (11, 12, 13) connected to a main network (10) via connection gateways (GW1, GW2, GW3), said method being implemented by a fluidification module (200), said method (100) comprising:
- a step (120) of collecting connection data from the plurality of connected objects (IoT1, IoT3);
- a step (130) of analyzing the collected connection data so as to identify a plurality of availability time periods, each of the availability time periods corresponding to a time interval during which one or more connected objects will be able to access the main network;
- a step (160) of receiving at least one connection request message (Q1) from an object (IoT1, IoT2, IoT3) connected to the main network, said connection request message comprising characteristics data of the required connection; and
- a step (180) of regulating connection of the plurality of objects connected to the main network (10) according to the availability time periods and the characteristics data of the required connection.

2. Regulating method (100) according to claim 1, **characterized in that** it comprises a step (125) of collecting connectivity data from the connection gateways (GW1, GW2, GW3).

3. Regulating method (100) according to claim 2, **characterized in that** collecting the connection data from the plurality of connected objects and the connectivity data from the connection gateways is performed continuously.

4. Regulating method (100) according to any one of claims 1 to 3, **characterized in that** the one or more steps of collecting data comprise collecting at least one item of bandwidth consumption or connection gateway availability data.

5. Regulating method (100) according to any one of the preceding claims, **characterized in that** it comprises a step (140) of establishing an availability repository.

6. Regulating method (100) according to claim 5, **characterized in that** it comprises a step (150) of updating the availability repository.

7. Regulating method (100) according to any one of the preceding claims, **characterized in that** the connection request message (Q1) comprises a usage frequency.

8. Regulating method (100) according to any one of the preceding claims, **characterized in that** it comprises a step (200) of querying, by a connected object of the plurality of connected objects, the fluidification module in order to obtain an available time period.

9. Regulating method (100) according to any one of the preceding claims, **characterized in that** it comprises a step (170) of classifying the connected objects according to a prioritization function (*f*) of connected objects.

10. Regulating method (100) according to any one of the preceding claims, **characterized in that** it comprises a step (181) of selecting, by the fluidification module (200), an optimal availability time period according to the identified availability time periods.

11. Regulating method (100) according to any one of the preceding claims, **characterized in that** it comprises a step (182) of selecting, by a connected object of the plurality of connected objects, an optimal availability time period according to the identified availability time periods.

12. Fluidification module (200) for regulating connectivity for a plurality of connected objects belonging to sub-networks (11, 12, 13) connected to a main network (10) via connection gateways (GW1, GW2, GW3), said fluidification module being configured to:
- collect connection data from the plurality of connected objects,
- analyze the collected connection data so as to identify a plurality of availability time periods, each of the availability time periods corresponding to a time interval in which one or more connected objects will be able to access the main network,
- receive at least one connection request message (Q1) from an object connected to the main network, said connection request message including characteristics data of the required connection, and
- regulate the connection of the plurality of objects connected to the main network (10) according to the availability time periods and the characteristics data of the required connection.

13. Connection gateway (GW1, GW2, GW3) comprising a fluidification module (200) according to claim 12.

14. System for regulating connectivity for a plurality of connected objects belonging to sub-networks (11, 12, 13) connected to a main network (10) via connection gateways (GW1, GW2, GW3), said system comprising at least one fluidification module (200) according to claim 12, at least two connected objects and at least two connection gateways.
